(19) 

Europäisches Patentamt
European Patent Office
Office européen des brevets

(11) **EP 3 832 770 A1**

(12) **EUROPEAN PATENT APPLICATION**

(43) Date of publication:
**09.06.2021 Bulletin 2021/23**

(21) Application number: **20188305.5**

(22) Date of filing: **29.07.2020**

(51) Int Cl.:
*H01M 10/052* [(2010.01)] *H01M 50/403* [(2021.01)]
*H01M 50/417* [(2021.01)]

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **06.12.2019 KR 20190161348**

(71) Applicant: **W-Scope Korea Co., Ltd.**
**Cheongju-si, Chungcheongbuk-do 28122 (KR)**

(72) Inventors:
• **PARK, Pyung Yong**
 **28122 Chungcheongbuk-do (KR)**

• **YOO, Gi Won**
 **28122 Chungcheongbuk-do (KR)**
• **CHO, Hee Min**
 **28122 Chungcheongbuk-do (KR)**
• **KIM, Byung Hyun**
 **28122 Chungcheongbuk-do (KR)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(54) **CROSSLINKED SEPARATOR AND METHOD OF MANUFACTURING THE SAME**

(57) The present invention provides a separator which includes a first component including a crosslinked structure of a polymer in which a crosslinkable compound is grafted to a first polyolefin having a weight-average molecular weight (Mw) of 1,000 to 50,000 g/mol and a second component including a second polyolefin having a weight-average molecular weight (Mw) of 200,000 to 1,000,000 g/mol and a method of manufacturing the same.

EP 3 832 770 A1

# EP 3 832 770 A1

## Description

CROSS-REFERENCE TO RELATED APPLICATION

This application claims priority to and the benefit of Korean Patent Application No. 10-2019-0161348, filed on DEC 6, 2019, the disclosure of which is incorporated herein by reference in its entirety.

BACKGROUND

### 1. Field of the Invention

The present invention relates to a crosslinked separator and a method of manufacturing the same, and more particularly, to a crosslinked separator including a low molecular weight polyolefin, that is, a crosslinked structure made of a polyolefin wax, and a method of manufacturing the same.

### 2. Discussion of Related Art

Lithium secondary batteries are widely used as power sources for various electronic products requiring downsizing and weight reduction, such as smartphones, laptop computers, and tablet PCs, and as the application thereof extends to the fields of smart grids and medium-to-large-sized batteries for electric vehicles, the development of lithium secondary batteries with large capacity, long lifetime, and high stability is required.

As a means for achieving the above-described objective, there have been active research efforts to develop separators which prevent internal short circuits by separating a positive electrode and a negative electrode and facilitate the movement of lithium ions during charging and discharging by including micropores and specifically microporous separators which are manufactured using a polyolefin, such as polyethylene, which is advantageous for forming pores through thermally induced phase separation, economical, and easily satisfies properties required for separators.

However, separators manufactured using polyethylene having a low melting point of about 135 °C may deform (shrink) at high temperatures above the melting point due to the heat generated in the battery. When a short circuit occurs due to such deformation, thermal runaway may occur in the battery, and this may lead to safety problems such as the ignition of the battery. To solve this problem, a method of improving thermal resistance by crosslinking a polyolefin separator has been proposed.

Japanese Patent Application Laid-Open Nos. Hei 11-144700 and Hei 11-172036 disclose an invention which improves thermal resistance by manufacturing a crosslinked separator using a silane-modified polyolefin. However, due to having extremely poor properties such as a thickness of 25 $\mu$m, an air permeability of 900 sec/100 ml, and a puncture strength of 200 gf compared to commercially available separators having a thickness of 12 $\mu$m or less, an air permeability of 150 sec/100 ml or less, and a puncture strength of 250 gf or more, practical commercialization of the manufactured separator is not possible.

Japanese Patent Registration No. 4583532 discloses a method of manufacturing a separator by mixing ultra-high molecular weight polyethylene having a weight-average molecular weight of 500,000 or more with a silane-modified polyolefin, but the ultra-high molecular weight polyethylene has the disadvantage of poor dispersibility in the silane-modified polyolefin. Accordingly, since the variation between the manufactured separators is large, a discard rate is high, and since the silane-crosslinkable polyolefin is concentrated in some areas thereof, separators having consistent properties cannot be obtained.

Korean Patent Registration No. 1857156 discloses a method of manufacturing a polyolefin separator, which includes: preparing a silane-grafted polyolefin solution by inputting a polyolefin, a diluent, an alkoxy group-containing vinylsilane, and an initiator in an extruder and mixing and reactive-extruding the same; and stretching, extracting, thermosetting, and crosslinking the silane-grafted polyolefin solution. However, this method has a problem in that since the alkoxy group-containing vinylsilane is grafted to the diluent during the reactive extrusion, it is impossible to recover the diluent, and since an unreacted alkoxy group-containing vinylsilane is eluted during the extraction, productivity and economic efficiency are degraded.

Korean Patent Registration No. 1536062 discloses a microporous separator for a secondary battery, which is made of a resin composition including, with respect to 100 parts by weight of a polyolefin resin, 0.01 to 1 part by weight of a photoinitiator and 0.001 to 5 parts by weight of a linking agent, but the microporous separator, which is manufactured by a dry process, has remarkably poor mechanical properties (e.g., tensile strength and tensile elongation) and thermal resistance (represented by a meltdown temperature) compared to separators manufactured by a wet process.

Korean Patent Registration No. 1955911 discloses a separator manufacturing method including crosslinking a silane-modified polyolefin included in a porous membrane and a separator manufactured thereby, but there is a limitation in achieving productivity above a certain level because in this method, crosslinking is carried out in the presence of moisture and takes at least 10 minutes to complete, and the trade-off between the mechanical properties and thermal resistance of the separator cannot be adequately resolved. In addition, in the manufacture of such a separator, a defect that degrades the surface quality of a product occurs due to a side reaction such as a crosslinking reaction between the silane-modified polyolefin and a matrix resin, and such a defect inhibits the movement of ions between battery operations and degrades the electrochemical properties of the battery.

SUMMARY OF THE INVENTION

The present invention is directed to providing: a separator which improves the durability and safety of a lithium secondary battery by preventing an internal short circuit which may occur when an electrode is exposed to a circumstance where a battery is misused in a mechanical sense, such as striking the battery, dropping the battery or vibrating the battery; and a method of manufacturing the separator, which balances mechanical properties, thermal resistance, and electrochemical properties of a battery and significantly improves productivity by shortening the time required for crosslinking.

One aspect of the present invention provides a separator which includes: a first component including a crosslinked structure of a polymer in which a crosslinkable compound is grafted to a first polyolefin having a weight-average molecular weight (Mw) of 1,000 to 50,000 g/mol; and a second component including a second polyolefin having a weight-average molecular weight (Mw) of 200,000 to 1,000,000 g/mol.

According to one embodiment, the first component and the second component may be a discontinuous phase and a continuous phase, respectively.

According to one embodiment, the polymer may include the crosslinkable compound in an amount of 10 to 50% by weight.

According to one embodiment, the separator may include the first component in an amount of 5 to 90% by weight.

According to one embodiment, each of the first and second polyolefins may be one selected from the group consisting of polyethylene, polypropylene, polybutylene, polymethylpentene, ethylene-vinyl acetate, ethylene-butyl acrylate, ethylene-ethyl acrylate, and a combination or copolymer of two or more thereof.

According to one embodiment, the crosslinkable compound may be an alkoxy group-containing vinylsilane.

According to one embodiment, the vinylsilane may be one selected from the group consisting of trimethoxyvinylsilane, triethoxyvinylsilane, triacetoxyvinylsilane, and a combination of two or more thereof.

According to one embodiment, the separator may satisfy one or more of the following conditions (i) to (vii):

(i) a meltdown temperature of 200 to 300 °C; (ii) a shutdown temperature of 120 to 140 °C; (iii) a machine direction (MD) tensile strength of 1,000 to 3,500 kgf/cm$^2$; (iv) a transverse direction (TD) tensile strength of 1,000 to 3,500 kgf/cm$^2$; (v) a machine direction (MD) tensile elongation of 50 to 150%; (vi) a transverse direction (TD) tensile elongation of 50 to 150%; and (vii) per m$^2$ of a surface of the separator, 10 or less surface defects having a different brightness from the surroundings and a size of 2 mm or more.

Another aspect of the present invention provides an electrochemical device including the separator, preferably a secondary battery, and more preferably a lithium secondary battery or a lithium ion battery.

Still another aspect of the present invention provides a method of manufacturing a separator, which includes: (a) preparing a polymer in which a crosslinkable compound is grafted to a first polyolefin having a weight-average molecular weight (Mw) of 1,000 to 50,000 g/mol by reacting the first polyolefin, the crosslinkable compound, and an initiator; (b) introducing a composition including the polymer at 10 to 40% by weight, a second polyolefin having a weight-average molecular weight (Mw) of 200,000 to 1,000,000 g/mol at 10 to 40% by weight, and a pore-forming agent at 40 to 80% by weight into an extruder, molding the composition in the form of a sheet, and stretching the sheet; (c) preparing a porous membrane by extracting the pore-forming agent from the stretched sheet; and (d) crosslinking the polymer included in the porous membrane, wherein the polymer includes the crosslinkable compound in an amount of 10 to 50% by weight.

DETAILED DESCRIPTION OF EXEMPLARY EMBODIMENTS

The present invention may be implemented in various different forms and thus is not limited to the embodiments described herein.

Throughout this specification, when a part is mentioned as being "connected" to another part, this means that the part may not only be "directly connected" to the other part but may also be "indirectly connected" to the other part through another member interposed therebetween. In addition, when a part is mentioned as "including" a specific component, this does not preclude the possibility of the presence of other component(s) in the part but means that the part may further include the other component(s), unless otherwise stated.

Separator

One aspect of the present invention provides a separator which includes: a first component including a crosslinked structure of a polymer (hereinafter referred to as "modified polymer") in which a crosslinkable compound is grafted to a first polyolefin having a weight-average molecular weight (Mw) of 1,000 to 50,000 g/mol; and a second component including a second polyolefin having a weight-average molecular weight (Mw) of 200,000 to 1,000,000 g/mol.

In the separator, the first component may be uniformly dispersed in the second component, and the crosslinked structure may be formed as at least some of the crosslinkable compounds grafted to a main chain of the first polyolefin are crosslinked with one another under a certain condition.

The separator may include the first component in an amount of 5 to 90%, preferably 5 to 50%, and more preferably 5 to 30% by weight. When the amount of the first component is less than 5% by weight, the required level of a meltdown temperature may not be realized, and when the amount of the first component is more than 90% by weight, since the brittleness of the separator increases, tensile strength and tensile elongation may be lowered.

The modified polymer may include the crosslinkable compound in an amount of 10 to 50% by weight. When the modified polymer includes the crosslinkable compound in an amount of less than 10% by weight, the required level of a meltdown temperature may not be realized, and when the modified polymer includes the crosslinkable compound in an amount of more than 50% by weight, since the brittleness of the separator increases, tensile strength and tensile elongation may be lowered, and since an excessive amount of oil mist is generated during the manufacture of the separator, processability and workability may be lowered.

The first and second polyolefins may have a weight-average molecular weight (Mw) of 1,000 to 50,000 g/mol and 200,000 to 1,000,000 g/mol, respectively. In particular, the first polyolefin may have a melting point of 60 to 140 °C.

When the first polyolefin has a weight-average molecular weight of less than 1,000 g/mol or a melting point of less than 60 °C, due to the low molecular weight, it is difficult to obtain the modified polymer, which is used for manufacturing the separator, in pellet form. On the other hand, when the first polyolefin has a weight-average molecular weight of more than 50,000 g/mol or a melting point of more than 140 °C, processability may be reduced for reasons such as an excessive load being applied to an extruder, and due to the occurrence of side reactions such as a crosslinking reaction between the modified polymer and the second polyolefin, defects that degrade the surface quality of the separator may occur, and such defects may degrade the electrochemical properties of the battery by inhibiting the movement of ions between battery operations.

In addition, when the second polyolefin has a weight-average molecular weight of less than 200,000 g/mol, since melt viscosity is excessively decreased, the dispersibility of the pore-forming agent may be extremely reduced, and in particular, the mixture of the second polyolefin and the pore-forming agent may be separated into separate phases or layers. On the other hand, when the second polyolefin has a weight-average molecular weight of more than 1,000,000 g/mol, since melt viscosity is increased, processability may be reduced, and uneven kneading may occur during melt kneading.

In addition, the ratio of the weight-average molecular weight (Mw) of the first polyolefin to the weight-average molecular weight (Mw) of the second polyolefin may be 0.001 to 0.1 and preferably 0.01 to 0.05. When the ratio of the weight-average molecular weight (Mw) of the first polyolefin to the weight-average molecular weight (Mw) of the second polyolefin does not satisfy the above-described range, since the compatibility between the first and second components and the dispersibility of the first component in the second component are lowered, there may be a large mechanical property variation between different regions of the separator, and therefore, the reliability and reproducibility of products may be significantly reduced.

In addition, each of the first and second polyolefins may have a polydispersity index (Mw/Mn) of 3 to 7. When the polydispersity indices of the first and second polyolefins are less than 3, since the dispersibility of the pore-forming agent in the polyolefins is reduced, the uniformity of the manufactured separator may be degraded, and when the polydispersity indices are more than 7, the mechanical strength of the finally obtained separator may be reduced.

Each of the first and second polyolefins may be one selected from the group consisting of polyethylene, polypropylene, polybutylene, polymethylpentene, ethylene-vinyl acetate, ethylene-butyl acrylate, ethylene-ethyl acrylate, an acid-modified polyolefin, and a combination or copolymer of two or more thereof, and is preferably polyethylene, but the present invention is not limited thereto.

The crosslinkable compound may be a silane-based compound and preferably an alkoxy group-containing vinylsilane. For example, the alkoxy group-containing vinylsilane may be one selected from the group consisting of trimethoxyvinylsilane, triethoxyvinylsilane, triacetoxyvinylsilane, and a combination of two or more thereof, and is preferably trimethoxyvinylsilane, but the present invention is not limited thereto.

In the separator, the first component and the second component may be a discontinuous phase and a continuous phase, respectively. In the separator, the first component may be crosslinked in a matrix formed of the second component and firmly support and fix the matrix and thereby improve the thermal resistance and mechanical properties of the separator.

As used herein, the term "matrix" refers to a component forming a continuous phase in a separator having two or more components. That is, in the separator, the second component which includes the second polyolefin is present as a continuous phase, and the first component which includes the crosslinked structure may be present as a discontinuous phase in the continuous phase.

Conventionally, in the manufacture of a separator including a polyolefin and a crosslinkable compound (e.g., silane-based compound), a method of manufacturing a crosslinked separator by applying a silane-based compound onto a base sheet from which a pore-forming agent has not been extracted and then grafting the same or a method of manufacturing a crosslinked separator by pre-mixing a polyolefin and a silane-based compound, performing grafting, and preparing a base sheet has been attempted. However, in these cases, although the property level required for a commercial separator is satisfied, there are disadvantages in that the silane-based compound is also grafted with components and/or compositions other than the polyolefin, and since it is required that such components and/or compositions are discarded in each process, manufacturing costs are significantly increased.

Since the crosslinking of the modified polymer is carried out after a series of processes including extrusion, stretching, extraction, and the like, it is necessary to control the crosslinked structure to be uniformly distributed in the separator by controlling the modified polymer to be uniformly distributed in a porous membrane from which the pore-forming agent has been extracted. When the crosslinking of the modified polymer is concentrated only in some parts of the separator, the required level of mechanical properties may not be realized, and in particular, since there is a large mechanical property variation between different regions of the separator, the reliability and reproducibility of products may be significantly reduced.

As described above, in the manufacture of a separator where a first component, which includes a crosslinked structure of a polymer including a first polyolefin and a crosslinkable compound grafted thereto, is dispersed in a second component including a second polyolefin, by adjusting the amount of the first component in the separator, the amount of the crosslinkable compound in the modified polymer, and/or the weight-average molecular weights of the first and second polyolefins and the ratio thereof, a separator satisfying one or more of the following conditions (i) to (vii) may be obtained:

(i) a meltdown temperature of 200 to 300 °C, preferably 230 to 300 °C, and more preferably 250 to 300 °C; (ii) a shutdown temperature of 120 to 140 °C; (iii) a machine direction (MD) tensile strength of 1,000 to 3,500 kgf/cm$^2$, preferably 2,000 to 3,000 kgf/cm$^2$, and more preferably 2,000 to 2,500 kgf/cm$^2$; (iv) a transverse direction (TD) tensile strength of 1,000 to 3,500 kgf/cm$^2$, preferably 2,000 to 3,000 kgf/cm$^2$, and more preferably 2,000 to 2,500 kgf/cm$^2$; (v) a machine direction (MD) tensile elongation of 50 to 150% and preferably 80 to 150%; (vi) a transverse direction (TD) tensile elongation of 50 to 150% and preferably 80 to 150%; and (vii) per m$^2$ of a surface of the separator, 10 or less, preferably 8 or less, and more preferably 5 or less surface defects (white dots and/or black dots) having a different brightness from the surroundings and a size of 2 mm or more.

Method of manufacturing separator

Another aspect of the present invention provides a method of manufacturing a separator, which includes: (a) preparing a polymer in which a crosslinkable compound is grafted to a first polyolefin having a weight-average molecular weight (Mw) of 1,000 to 50,000 g/mol by reacting the first polyolefin, the crosslinkable compound, and an initiator; (b) introducing a composition including the polymer at 10 to 40% by weight, a second polyolefin having a weight-average molecular weight (Mw) of 200,000 to 1,000,000 g/mol at 10 to 40% by weight, and a pore-forming agent at 40 to 80% by weight into an extruder, molding the composition in the form of a sheet, and stretching the sheet; (c) preparing a porous membrane by extracting the pore-forming agent from the stretched sheet; and (d) crosslinking the polymer included in the porous membrane, wherein the polymer includes the crosslinkable compound in an amount of 10 to 50% by weight.

In the step (a), a first polyolefin having a weight-average molecular weight (Mw) of 1,000 to 50,000 g/mol and a polydispersity index (Mw/Mn) of 3 to 7, a crosslinkable compound, and an initiator may be reacted, and thereby a polymer (hereinafter referred to as "modified polymer") in which the crosslinkable compound is grafted to a main chain of the first polyolefin may be obtained. Here, the amounts and proportions of the reactants may be adjusted so that the polymer includes the crosslinkable compound in an amount of 10 to 50% by weight.

In the step (b), a composition including the modified polymer, a second polyolefin having a weight-average molecular weight (Mw) of 200,000 to 1,000,000 g/mol and a polydispersity index (Mw/Mn) of 3 to 7, and a pore-forming agent may be extruded and discharged through a T-die and stretched, and thereby a base sheet may be obtained. The composition may include the modified polymer obtained in the step (a) at 10 to 40% by weight, the second polyolefin at 10 to 40% by weight, and the pore-forming agent at 40 to 80% by weight. When the modified polymer is included in the composition in an amount of less than 10% by weight, since a crosslinking reaction is hindered, the required level of mechanical properties may not be realized, and when the modified polymer is included in the composition in an amount of more than 40% by weight, it may be difficult to realize properties required for a commercial separator.

The pore-forming agent may be one selected from the group consisting of paraffin oil, paraffin wax, mineral oil, solid paraffin, soybean oil, rapeseed oil, palm oil, coconut oil, di-2-ethylhexyl phthalate, dibutyl phthalate, diisononyl phthalate, diisodecyl phthalate, bis(2-propylhepthyl)phthalate, naphthenic oil, and a combination of two or more thereof, and is preferably paraffin oil and more preferably paraffin oil having a kinematic viscosity of 50 to 100 cSt at 40 °C, but the present invention is not limited thereto.

The composition may further include a crosslinking catalyst. When the composition further includes a crosslinking catalyst, the crosslinking of the step (d) may be promoted. As such a crosslinking catalyst, generally, a carboxylic acid salt of a metal such as tin, zinc, iron, lead or cobalt, an organic base, an inorganic acid or an organic acid may be used. For example, the crosslinking catalyst may be dibutyltin dilaurate, dibutyltin diacetate, stannous acetate, stannous caprylate, zinc naphthenate, zinc caprylate, cobalt naphthenate, ethylamine, dibutylamine, hexylamine, pyridine, an inorganic acid such as sulfuric acid or hydrochloric acid, an organic acid such as toluene sulfonic acid, acetic acid, stearic acid or maleic acid, or the like, and is preferably dibutyltin dilaurate, but the present invention is not limited thereto.

Conventionally, the crosslinking catalyst has been used in the way of adding the crosslinking catalyst in the preparation of a silane-modified polyolefin or applying a solution or dispersion of the crosslinking catalyst onto a porous membrane. However, with the conventional method, it is difficult to uniformly disperse the crosslinking catalyst in the silane-modified polyolefin. As described above, before crosslinking, it is required that the modified polymer included in the porous membrane is uniformly dispersed and the crosslinking catalyst involved in the crosslinking of the modified polymer is also uniformly dispersed.

In this regard, by pre-mixing the crosslinking catalyst with the pore-forming agent and introducing the mixture into the extruder through a side injector, it is possible to uniformly disperse the crosslinking catalyst in the first component and/or the second component and thereby further increase the efficiency of a crosslinking reaction.

The crosslinking catalyst may be included in the composition in an amount of 0.01 to 5% by weight. When the crosslinking catalyst is included in the composition in an amount of less than 0.01% by weight, it may not be possible to promote the crosslinking to the required level, and when the crosslinking catalyst is included in the composition in an amount of more than 5% by weight, since a resulting reaction rate converges to the required level regardless of how much catalyst is used, it is disadvantageous in terms of economic efficiency and productivity.

In the step (b), the sheet may be stretched by a known method such as uniaxial stretching or biaxial stretching (sequential or simultaneous biaxial stretching). In the case of the sequential biaxial stretching, the sheet may be stretched 4x to 20x in each of the machine direction (MD) and the transverse direction (TD) and thus be stretched 16x to 400x in terms of area.

In the step (d), the modified polymer included in the porous membrane from which the pore-forming agent has been extracted and removed may be crosslinked. The crosslinking may be carried out for about 20 hours or less and preferably for 5 to 20 hours, by placing the porous membrane in a constant temperature and humidity tank whose temperature and humidity have been adjusted to predetermined ranges, for example, a constant temperature and humidity tank whose temperature and humidity have been adjusted to a range of 50 to 100 °C and a range of 50 to 90%, respectively.

Meanwhile, the step (d) is not performed in a continuous manner after the steps (a) to (c) or, even if performed in a continuous manner after the steps (a) to (c), is done in a moist environment where it is difficult to increase the temperature above a certain level, and therefore, it may take an excessive amount of time for the crosslinking reaction to be completed. In this regard, in the step (d), the porous membrane may be passed through a water bath with a temperature of about 90 °C or put in a crosslinking bath containing a solution having a boiling point of preferably 100 °C or more, more preferably 120 °C or more, and even more preferably 150 °C or more and then passed through the bath in a continuous manner so that the time required for the crosslinking reaction is significantly shortened and thereby productivity is improved.

Specifically, since the solution has a component having a boiling point of 100 °C or more, when a temperature is adjusted to 100 °C or more, preferably 120 °C or more, and more preferably 120 to 130 °C during the crosslinking reaction, the crosslinking reaction may be promoted. As the component, one selected from the group consisting of ethylene glycol, diethylene glycol, propylene glycol, and a combination of two or more thereof may be used. Since such a component is hygroscopic, a crosslinking reaction may occur using the moisture contained in the component, but if necessary, the component may be further mixed with a certain amount of water and used.

In addition, the solution may further include a crosslinking catalyst, and in this case, the crosslinking reaction may be sufficiently promoted even without adding a predetermined amount of water. The crosslinking catalyst may be included in the solution in an amount of 0.01 to 10% by weight and preferably 0.1 to 5% by weight. When the crosslinking catalyst is included in the solution in an amount of less than 0.01% by weight, it may not be possible to promote the crosslinking to the required level, and when the crosslinking catalyst is included in the solution in an amount of more than 10% by weight, since a resulting reaction rate converges to the required level regardless of how much catalyst is used, it is disadvantageous in terms of economic efficiency and productivity.

The crosslinking catalyst included in the solution contained in the crosslinking bath has essentially the same effect as the crosslinking catalyst included in the composition. However, in the case of the crosslinking catalyst included in the composition, that is, the crosslinking catalyst introduced through a side injector of the extruder in the step (b), although the crosslinking catalyst may be able to effectively crosslink the modified polymer distributed in the center portion (center layer) of the porous membrane in the step (d), it cannot actively participate in the crosslinking of the modified polymer distributed in the surface portion (skin layer). On the other hand, in the case of the crosslinking catalyst included in the solution contained in the crosslinking bath, since the crosslinking catalyst comes into contact with the surface portion (skin layer) of the porous membrane when the porous membrane is passed through the crosslinking bath, it may be able to more effectively promote the crosslinking of the modified polymer distributed in the surface portion (skin layer) of the porous membrane. Types and effects of the crosslinking catalyst are as described above.

Hereinafter, exemplary embodiments of the present invention will be described in detail.

Preparation Example 1

A high-density polyethylene wax having a weight-average molecular weight (Mw) of 8,000 g/mol, a density of 0.97 g/mL, a degree of crystallinity of 84%, and a melting point of 127 °C was slowly introduced into a 2 L round flask preheated to 200 °C while stirring and was thereby melted to a liquid state, and then vinyltrimethoxysilane was slowly added thereto. The input ratio (weight ratio) of the high-density polyethylene wax and the vinyltrimethoxysilane was 90:10.

After the liquid including the completely molten high-density polyethylene wax and vinyltrimethoxysilane was obtained, 2,5-dimethyl-2,5-di(tert-butylperoxy)hexane as an initiator for the grafting of the vinyltrimethoxysilane was slowly added thereto while stirring for one hour, and thereby a vinyltrimethoxysilane-grafted high-density polyethylene (PE) wax (hereinafter referred to as "silane-modified PE wax") was obtained. In this case, the initiator was added in an amount of 1 part by weight relative to 100 parts by weight of the vinyltrimethoxysilane. The silane-modified PE wax was sufficiently cooled to room temperature and then pulverized, and thereby a silane-modified PE wax powder was obtained.

Preparation Example 2

A high-density polyethylene wax having a weight-average molecular weight (Mw) of 11,000 g/mol, a density of 0.97 g/mL, a degree of crystallinity of 83%, and a melting point of 128 °C was slowly introduced into a 2 L round flask preheated to 200 °C while stirring and was thereby melted to a liquid state, and then vinyltrimethoxysilane was slowly added thereto. The input ratio (weight ratio) of the high-density polyethylene wax and the vinyltrimethoxysilane was 90:10.

After the liquid including the completely molten high-density polyethylene wax and vinyltrimethoxysilane was obtained, 2,5-dimethyl-2,5-di(tert-butylperoxy)hexane as an initiator for the grafting of the vinyltrimethoxysilane was slowly added thereto while stirring for one hour, and thereby a vinyltrimethoxysilane-grafted high-density polyethylene (PE) wax (hereinafter referred to as "silane-modified PE wax") was obtained. In this case, the initiator was added in an amount of 1 part by weight relative to 100 parts by weight of the vinyltrimethoxysilane. The silane-modified PE wax was sufficiently cooled to room temperature and then pulverized, and thereby a silane-modified PE wax powder was obtained.

Preparation Example 3

A high-density polyethylene wax having a weight-average molecular weight (Mw) of 4,000 g/mol, a density of 0.98 g/mL, a degree of crystallinity of 85%, and a melting point of 126 °C was slowly introduced into a 2 L round flask preheated to 200 °C while stirring and was thereby melted to a liquid state, and then vinyltrimethoxysilane was slowly added thereto. The input ratio (weight ratio) of the high-density polyethylene wax and the vinyltrimethoxysilane was 90:10.

After the liquid including the completely molten high-density polyethylene wax and vinyltrimethoxysilane was obtained, 2,5-dimethyl-2,5-di(tert-butylperoxy)hexane as an initiator for the grafting of the vinyltrimethoxysilane was slowly added thereto while stirring for one hour, and thereby a vinyltrimethoxysilane-grafted high-density polyethylene (PE) wax (hereinafter referred to as "silane-modified PE wax") was obtained. In this case, the initiator was added in an amount of 1 part by weight relative to 100 parts by weight of the vinyltrimethoxysilane. The silane-modified PE wax was sufficiently cooled to room temperature and then pulverized, and thereby a silane-modified PE wax powder was obtained.

Example 1

20 parts by weight of high-density polyethylene (HDPE) having a weight-average molecular weight (Mw) of 350,000 g/mol and a polydispersity index (Mw/Mn) of 5, 10 parts by weight of the silane-modified PE wax powder obtained in Preparation Example 1, and 70 parts by weight of paraffin oil having a kinematic viscosity of 70 cSt at 40 °C were mixed and then introduced into a twin-screw extruder (inner diameter: 58 mm, L/D=45). The mixture was discharged, through a T-die having a width of 400 mm, from the twin-screw extruder at a screw rotation speed of 40 rpm and a temperature of 200 °C and then passed through a casting roll having a temperature of 40 °C, and thereby a base sheet having a thickness of 1,000 μm was obtained.

A film was prepared by stretching the base sheet 6x in the machine direction (MD) in a roll stretching machine set at 110 °C and 7x in the transverse direction (TD) in a tenter stretching machine set at 125 °C. The film was then immersed in a 25 °C dichloromethane leaching bath for one minute so that the paraffin oil was extracted and removed therefrom. Subsequently, the film was immersed in an immersion bath containing a dichloromethane solution in which the concentration of dibutyltin dilaurate was adjusted to 1% by weight and then dried for five minutes at 50 °C.

Subsequently, in the tenter stretching machine, the film was heated to 125 °C, stretched 1.2x in the transverse direction (TD), and then relaxed, and was thereby thermoset to a width of 0.9 times the width before stretching. The film was crosslinked for 10 hours in a constant temperature and humidity tank whose temperature and humidity were set at 80 °C and 90%, respectively, and thereby a porous separator was obtained.

Example 2

A porous separator was manufactured in the same manner as in Example 1 except that the silane-modified PE wax powder obtained in Preparation Example 2 was used instead of the silane-modified PE wax powder obtained in Preparation Example 1.

Example 3

A porous separator was manufactured in the same manner as in Example 1 except that the silane-modified PE wax powder obtained in Preparation Example 3 was used instead of the silane-modified PE wax powder obtained in Preparation Example 1.

Comparative Example 1

29 parts by weight of high-density polyethylene having a melting point of 135 °C and a weight-average molecular weight (Mw) of 300,000, 65 parts by weight of paraffin oil having a kinematic viscosity of 40 cSt at 40 °C, 2 parts by weight of trimethoxyvinylsilane, 2 parts by weight of dibutyltin dilaurate, and 2 parts by weight of 2,5-dimethyl-2,5-di(tert-butylperoxy)hexane were mixed and then introduced into a twin-screw extruder (inner diameter: 58 mm, L/D=56). The mixture was reactive-extruded in the twin-screw extruder at a temperature of 200 °C and a screw rotation speed of 30 rpm to prepare a silane-modified polyolefin composition, and the silane-modified polyolefin composition was discharged through a T-die having a width of 300 mm and then passed through a casting roll having a temperature of 40 °C, and thereby a base sheet having a thickness of 800 μm was obtained.

A stretched film was prepared by stretching the base sheet 5.5x in the machine direction (MD) in a roll stretching machine set at 108 °C and 5.5x in the transverse direction (TD) in a tenter stretching machine set at 123 °C. The stretched film was then immersed in a 25 °C dichloromethane leaching bath for 10 minutes so that the paraffin oil was extracted and removed therefrom. The film from which the paraffin oil had been removed was thermoset at 127 °C and then crosslinked for 24 hours in a constant temperature and humidity tank whose temperature and humidity were set at 80 °C and 90%, respectively, and thereby a porous separator was obtained.

Comparative Example 2

29.5 parts by weight of high-density polyethylene having a weight-average molecular weight (Mw) of 350,000 g/mol and a polydispersity index (Mw/Mn) of 5, 0.5 parts by weight of silane-modified high-density polyethylene (the weight-average molecular weight (Mw) of high-density polyethylene is 200,000 g/mol), and 70 parts by weight of paraffin oil having a kinematic viscosity of 70 cSt at 40 °C were mixed and then introduced into a twin-screw extruder (inner diameter: 58 mm, L/D=56). Dibutyltin dilaurate, which is a crosslinking catalyst, was pre-dispersed in a portion of the paraffin oil, and the dispersion was introduced through a side injector of the twin-screw extruder so that the amount of dibutyltin dilaurate was 0.5% by weight based on the total weight of the material passing through the twin-screw extruder. The mixture was discharged, through a T-die having a width of 300 mm, from the twin-screw extruder at a screw rotation speed of 40 rpm and a temperature of 200 °C and then passed through a casting roll having a temperature of 40 °C, and thereby a base sheet having a thickness of 800 μm was obtained.

A stretched film was prepared by stretching the base sheet 6x in the machine direction (MD) in a roll stretching machine set at 110 °C and 7x in the transverse direction (TD) in a tenter stretching machine set at 125 °C. The stretched film was then immersed in a 25 °C dichloromethane leaching bath for one minute so that the paraffin oil was extracted and removed therefrom. The film from which the paraffin oil had been removed was dried at 50 °C for five minutes. Subsequently, in the tenter stretching machine, the film was heated to 125 °C, stretched 1.45x in the transverse direction (TD), and then relaxed, and was thereby thermoset to a width of 1.25 times the width before stretching. The film was crosslinked for 72 hours in a constant temperature and humidity tank whose temperature and humidity were set at 85 °C and 85%, respectively, and thereby a porous separator was obtained.

Comparative Example 3

29.5 parts by weight of high-density polyethylene (HDPE) having a weight-average molecular weight (Mw) of 350,000 g/mol and a polydispersity index (Mw/Mn) of 5, 0.5 parts by weight of silane-modified high-density polyethylene (the weight-average molecular weight (Mw) of high-density polyethylene is 200,000 g/mol), and 70 parts by weight of paraffin oil having a kinematic viscosity of 70 cSt at 40 °C were mixed and then introduced into a twin-screw extruder (inner diameter: 58 mm, L/D=56). The mixture was discharged, through a T-die having a width of 300 mm, from the twin-screw extruder at a temperature of 200 °C and a screw rotation speed of 40 rpm and then passed through a casting roll having a temperature of 40 °C, and thereby a base sheet having a thickness of 800 $\mu$m was obtained.

A stretched film was prepared by stretching the base sheet 6x in the machine direction (MD) in a roll stretching machine set at 110 °C and 7x in the transverse direction (TD) in a tenter stretching machine set at 125 °C. The stretched film was then immersed in a 25 °C dichloromethane leaching bath for one minute so that the paraffin oil was extracted and removed therefrom. The film from which the paraffin oil had been removed was dried at 50 °C. Subsequently, in the tenter stretching machine, the film was heated to 125 °C, stretched 1.45x in the transverse direction (TD), and then relaxed, and was thereby thermoset to a width of 1.25 times the width before stretching. The film was crosslinked for 72 hours in a constant temperature and humidity tank whose temperature and humidity were set at 85 °C and 85%, respectively, and thereby a porous separator was obtained.

Experimental Example

In the present invention, properties were measured according to the following test methods. Unless otherwise stated, each test item was measured at room temperature (25 °C).

- Thickness ($\mu$m): The thickness of a separator specimen was measured using a precision thickness gauge.
- Porosity (%): The porosity of a separator specimen having a radius of 25 mm was measured using a capillary porometer commercially available from Porous Materials, Inc. (PMI), in accordance with ASTM F316-03.

- Gurley air permeability (sec/100 ml): The time taken for 100 ml of air to pass through a separator specimen having a diameter of 29.8 mm at a measurement pressure of 0.025 MPa was measured using an EGO2-5 Gurley densometer commercially available from Asahi Seiko Co., Ltd.
- Tensile strength (kgf/cm$^2$): The stress applied to a separator specimen having a size of 20 mm×200 mm until the specimen fractured was measured using a tensile strength tester.
- Puncture strength (gf): Using a KES-G5 perforation strength tester commercially available from Kato Tech Co., Ltd. and a stick having a diameter of 0.5 mm, a load was applied to a separator specimen having a size of 100 mm×50 mm at a speed of 0.05 cm/sec, and the load applied at the time the specimen was perforated was measured.
- Meltdown temperature and shutdown temperature (°C): Using a thermomechanical analyzer (TMA analyzer), a load of 0.01 N was applied to a separator specimen and then the temperature was raised at a rate of 5 °C/min, and a degree of deformation of the specimen was measured.
- Thermal shrinkage ratio (%): A separator specimen having a size of 200 mm×200 mm was maintained in an oven set at 130 °C for one hour while being sandwiched between A4-sized paper sheets and then was cooled at room temperature. The lengths in the transverse and machine directions of the shrunk specimen were measured, and the results were substituted into the following formula to calculate a thermal shrinkage ratio.

$$\text{Thermal shrinkage ratio } (\%) = (l_3 - l_4) \,/\, l_3 * 100$$

(In the above formula, $l_3$ is the length in the transverse or machine direction of the specimen before shrinking, and $l_4$ is the length in the transverse or machine direction of the specimen after shrinking.)
- Number of surface defects (ea/m$^2$): In the surface of a separator, the number of nonuniform fine dots (surface defects) having a significantly different brightness from the surroundings and a size of 2 mm or more were visually determined.

The properties of the separators manufactured according to Examples and Comparative Examples were measured, and the results are shown in the following Table 1 and Table 2.

[Table 1]

| Classification | Example 1 | Example 2 | Example 3 |
|---|---|---|---|
| Thickness | 12 | 12 | 12 |
| Porosity | 39 | 38 | 40 |
| Gurley air permeability | 220 | 250 | 230 |
| MD tensile strength | 2,030 | 2310 | 1950 |
| TD tensile strength | 2,105 | 2230 | 1870 |
| MD thermal shrinkage ratio | 10 | 8 | 10 |
| Puncture strength | 667 | 680 | 650 |
| Meltdown temperature | 250 | 300 | 210 |
| Shutdown temperature | 135 | 135 | 134 |
| Number of surface defects | 8 | 10 | 5 |

[Table 2]

| Classification | Comparative Example 1 | Comparative Example 2 | Comparative Example 3 |
|---|---|---|---|
| Thickness | 12 | 12 | 9.4 |
| Porosity | 35 | 51 | 50 |
| Gurley air permeability | 250 | 169 | 173 |
| MD tensile strength | 2,005 | 1,920 | 1,520 |
| TD tensile strength | 2,020 | 1,860 | 1,020 |
| MD thermal shrinkage ratio | 17 | 8 | 7 |
| Puncture strength | 530 | 296 | 210 |
| Meltdown temperature | 200 | 210 | 205 |
| Shutdown temperature | 135 | 145 | 140 |
| Number of surface defects | 42 | 138 | 112 |

Since one aspect of the present invention provides a separator including a first component including a crosslinked structure of a polymer in which a crosslinkable compound is grafted to a first polyolefin having a weight-average molecular weight (Mw) of 1,000 to 50,000 g/mol and a second component including a second polyolefin having a weight-average molecular weight (Mw) of 200,000 to 1,000,000 g/mol, a separator in which mechanical properties and thermal resistance are improved in a balanced manner can be implemented, and since the problem that manufacturing costs increase due to the elution and disposal of a crosslinkable compound is solved, productivity and economic efficiency can be maximized.

In addition, since the number of surface defects, which lower the surface quality of the separator and inhibit the movement of ions between battery operations, formed due to a side reaction between the second polyolefin and the polymer including the crosslinkable compound grafted therein is significantly reduced, the electrochemical properties of a battery can be improved in a balanced manner.

However, it should be understood that the effects of the present invention are not limited to those described above and include all effects that can be deduced from the configuration of the present invention described in the detailed description or claims of the present invention.

The foregoing description of the present invention is intended for illustration, and it will be understood by those skilled in the art to which the present invention pertains that the invention can be easily modified and implemented in various other forms without changing the technical spirit or essential features of the present invention. Therefore, it should be understood that the embodiments described above are merely illustrative in every aspect and not restrictive. For example, each of the components described as being one combined entity may be implemented separately, and similarly, the components described as being separate may be implemented in a combined form.

The scope of the present invention is defined by the following claims, and all changes or modifications derived from the meaning and scope of the claims and their equivalents should be interpreted as being included in the scope of the present invention.

**Claims**

1.    A separator comprising:

    a first component including a crosslinked structure of a polymer in which a crosslinkable compound is grafted to a first polyolefin having a weight-average molecular weight (Mw) of 1,000 to 50,000 g/mol; and
    a second component including a second polyolefin having a weight-average molecular weight (Mw) of 200,000 to 1,000,000 g/mol.

2.    The separator of claim 1, wherein the first component and the second component are a discontinuous phase and a continuous phase, respectively.

3.    The separator of claim 1, wherein the polymer includes the crosslinkable compound in an amount of 10 to 50% by weight.

4.    The separator of claim 1, wherein the separator includes the first component in an amount of 5 to 90% by weight.

5.    The separator of claim 1, wherein each of the first polyolefin and the second polyolefin is one selected from the group consisting of polyethylene, polypropylene, polybutylene, polymethylpentene, ethylene-vinyl acetate, ethylene-butyl acrylate, ethylene-ethyl acrylate, and a combination or copolymer of two or more thereof.

6.    The separator of claim 1, wherein the crosslinkable compound includes a vinylsilane having an alkoxy group.

7.    The separator of claim 6, wherein the vinylsilane is one selected from the group consisting of trimethoxyvinylsilane, triethoxyvinylsilane, triacetoxyvinylsilane, and a combination of two or more thereof.

8.    The separator of claim 1, wherein the separator satisfies one or more of the following conditions (i) to (vii):

    (i) a meltdown temperature of 200 to 300 °C;
    (ii) a shutdown temperature of 120 to 140 °C;
    (iii) a machine direction (MD) tensile strength of 1,000 to 3,500 kgf/cm$^2$;
    (iv) a transverse direction (TD) tensile strength of 1,000 to 3,500kgf/cm$^2$;
    (v) a machine direction (MD) tensile elongation of 50 to 150%;
    (vi) a transverse direction (TD) tensile elongation of 50 to 150%; and
    (vii) per m$^2$ of a surface of the separator, 10 or less surface defects having a different brightness from the surroundings and a size of 2 mm or more.

9.    An electrochemical device comprising the separator of any one of claim 1 to claim 8.

10.   A method of manufacturing a separator, comprising:

    (a) preparing a polymer in which a crosslinkable compound is grafted to a first polyolefin having a weight-average molecular weight (Mw) of 1,000 to 50,000 g/mol by reacting the first polyolefin, the crosslinkable compound, and an initiator;
    (b) introducing a composition including the polymer at 10 to 40% by weight, a second polyolefin having a weight-average molecular weight (Mw) of 200,000 to 1,000,000 g/mol at 10 to 40% by weight, and a pore-forming agent at 40 to 80% by weight into an extruder, molding the composition in the form of a sheet, and stretching the sheet;
    (c) preparing a porous membrane by extracting the pore-forming agent from the stretched sheet; and
    (d) crosslinking the polymer included in the porous membrane,

wherein the polymer includes the crosslinkable compound in an amount of 10 to 50% by weight.

Europäisches Patentamt

European Patent Office

Office européen des brevets

# EUROPEAN SEARCH REPORT

Application Number

EP 20 18 8305

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 101 955 911 B1 (W SCOPE KOREA CO LTD [KR]) 12 March 2019 (2019-03-12) * the whole document * | 1-10 | INV. H01M10/052 H01M50/403 H01M50/417 |
| X,P | -& EP 3 614 460 A1 (W SCOPE KOREA CO LTD [KR]) 26 February 2020 (2020-02-26) * paragraph [0062]; claim all * | 1-10 | |
| X,P | KR 2020 0039060 A (W SCOPE KOREA CO LTD [KR]) 16 April 2020 (2020-04-16) * synthesis examples 1 and 2; claim all; example all * | 1-10 | |
| A | Thomas: "GPC/SEC Practical Tips and Tricks", , 1 October 2011 (2011-10-01), XP055608344, Retrieved from the Internet: URL:https://www.agilent.com/cs/library/slidepresentation/Public/GCC2011-Wksp_GPC_Tips-and-Tricks_Presentation.pdf [retrieved on 2019-07-24] * the whole document * | 1,10 | |

-/--

TECHNICAL FIELDS SEARCHED (IPC)

H01M

The present search report has been drawn up for all claims

| Place of search | Date of completion of the search | Examiner |
|---|---|---|
| Munich | 13 January 2021 | Götz, Heide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 20 18 8305

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Prof Premamoy Ghosh: "POLYMER SCIENCE FUNDAMENTALS OF POLYMER SCIENCE Molecular Weights of Polymers CONTENTS Introduction Concept of Average Molecular Weight Number Average Molecular Weight Membrane Osmometry Weight Average Molecular Weight Assessment of Shape of Polymer Molecules Viscosity Average Molecular Weight Gener", , 21 September 2006 (2006-09-21), XP055608363, Retrieved from the Internet: URL:http://nsdl.niscair.res.in/jspui/bitstream/123456789/406/2/Molecular%20weights%20of%20polymers.pdf [retrieved on 2019-07-24] * the whole document * ----- | 1,10 | |

TECHNICAL FIELDS
SEARCHED     (IPC)

The present search report has been drawn up for all claims

| Place of search | Date of completion of the search | Examiner |
|---|---|---|
| Munich | 13 January 2021 | Götz, Heide |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 18 8305

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2021

| Patent document cited in search report | | Publication date | Patent family member(s) | | | Publication date |
|---|---|---|---|---|---|---|
| KR 101955911 | B1 | 12-03-2019 | CN | 110857362 | A | 03-03-2020 |
| | | | EP | 3614460 | A1 | 26-02-2020 |
| | | | JP | 6688922 | B2 | 28-04-2020 |
| | | | JP | 2020031047 | A | 27-02-2020 |
| | | | KR | 101955911 | B1 | 12-03-2019 |
| | | | US | 2020067054 | A1 | 27-02-2020 |
| | | | WO | 2020040389 | A1 | 27-02-2020 |
| EP 3614460 | A1 | 26-02-2020 | CN | 110857362 | A | 03-03-2020 |
| | | | EP | 3614460 | A1 | 26-02-2020 |
| | | | JP | 6688922 | B2 | 28-04-2020 |
| | | | JP | 2020031047 | A | 27-02-2020 |
| | | | KR | 101955911 | B1 | 12-03-2019 |
| | | | US | 2020067054 | A1 | 27-02-2020 |
| | | | WO | 2020040389 | A1 | 27-02-2020 |
| KR 20200039060 | A | 16-04-2020 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020190161348
- JP HEI11144700 B
- JP HEI11172036 A
- JP 4583532 B
- KR 1857156
- KR 1536062
- KR 1955911